# Europäisches Patentamt
## European Patent Office
## Office européen des brevets

(19)

(11) Numéro de publication: **0 194 907**
**B1**

(12) # FASCICULE DE BREVET EUROPEEN

(45) Date de publication du fascicule du brevet:
**17.05.89**

(51) Int. Cl.⁴: **F16L 23/00**, F16B 31/04

(21) Numéro de dépôt: **86400278.7**

(22) Date de dépôt: **10.02.86**

(54) **Element filtrant les variations de contraintes dans un assemblage boulonne.**

(30) Priorité: **19.02.85  FR 8502360**

(43) Date de publication de la demande:
**17.09.86 Bulletin 86/38**

(45) Mention de la délivrance du brevet:
**17.05.89 Bulletin 89/20**

(84) Etats contractants désignés:
**AT BE CH DE FR GB IT LI SE**

(56) Documents cités:
**DE-A- 2 150 467**
**FR-A- 1 306 491**
**FR-A- 1 507 450**
**FR-A- 2 328 869**
**FR-A- 2 442 988**
**GB-A- 804 359**
**GB-A- 2 103 746**
**GB-A- 2 120 795**
**US-A- 2 778 399**
**US-A- 3 004 780**
**US-A- 3 188 116**

(73) Titulaire: **FRAMATOME, Tour Fiat 1 place de la Coupole,
F-92400 Courbevoie(FR)**

(72) Inventeur: **Bonnet, Bernard, 7, rue Charles Goguel,
F-95600 Eaubonne(FR)**

(74) Mandataire: **Mongrédien, André et al, c/o
BREVATOME 25, rue de Ponthieu, F-75008 Paris(FR)**

ACTORUM AG

## Description

Un assemblage boulonné comporte une première et une seconde pièces percées d'au moins un trou en regard, une vis traversant ces trous, et un écrou vissé sur la vis. De tels assemblages sont serrés à l'origine à un couple de valeur déterminée. Toutefois, en conditions normales d'exploitation, les assemblages boulonnés peuvent être soumis à des sollicitations d'origine mécanique, comme des vibrations, ou thermiques, pouvant conduire à des modifications de la tension introduite à l'origine dans les boulons lors de l'opération de serrage initiale. Ces variations peuvent à leur tour entraîner une perte partielle, voire totale, de la fonction impartie à l'assemblage boulonné.

C'est le cas par exemple dans les échangeurs de chaleur démontable à assemblages boulonnés lorsqu'ils sont soumis à des transitoires thermiques importants. En effet, ces transitoires peuvent donner lieu à des surserrages lors des chocs chauds. Un tel surserrage risque de conduire à une déformation permanente des boulons ou des goujons ou à une déformation des pièces assemblées. Il peut en résulter une perte d'étanchéité de l'assemblage lorsque l'échangeur est revenu aux conditions de température normales. Les transitoires thermiques peuvent également donner lieu à des chocs froids qui produisent des sous-serrages. Ces sous-serrages ne détériorent pas les structures, en particulier les boulons et/ou les goujons, mais diminuent les pressions d'écrasement des joints et provoquent également des fuites.

On connaît, selon l'art antérieur, diverses mesures pour diminuer les amplitudes de variation d'efforts sur les assemblages boulonnés en service.

Sur les matériels courants, et lorsque les efforts initiaux de serrage et les variations sont faibles, il est connu d'interposer sous les écrous ou les têtes de boulons des rondelles hélicoïdales dites "rondelles Grower". De telles rondelles sont fabriquées en série à partir d'une couronne de faible hauteur, de section trapézoïdale, fendue et déformée pour constituer l'équivalent d'un ressort à une spire. A l'état libre, la hauteur d'une telle rondelle est de l'ordre de deux fois l'épaisseur de la couronne, ce qui correspond à un pas d'hélice voisin de l'épaisseur. Lorsque la rondelle est écrasée, elle présente la forme plate d'une rondelle classique. La totalité de la flèche initiale est annulée par l'effort de serrage.

Le rôle de ces rondelles hélicoïdales est double : elles agissent comme frein d'écrou en empêchant sa rotation, et d'autre part, elles peuvent compenser par effet ressort une légère diminution de la tension dans les boulons. Cependant, il est à remarquer que ces rondelles agissent seulement dans le cas d'une diminution de pression. Dans le cas contraire d'une augmentation de pression, elles ne permettent aucune compensation de la tension dans les boulons, étant donné, comme on l'a rappelé ci-dessus, que la totalité de la flèche initiale est annulée et que, par conséquent, les rondelles Grower présentent la forme d'une rondelle classique.

Le mode même de fabrication de ces éléments implique que les efforts que ces rondelles sont susceptibles de transmettre dans leur plage de fonctionnement élastique sont inférieurs à l'effort nécessaire à la déformation initiale de la couronne. En conséquence, compte tenu des faibles dimensions de cette couronne, les efforts susceptibles d'être transmis en service sont également faibles.

On connaît également, selon l'art antérieur, des rondelles coniques dites "rondelles Belleville". De telles rondelles peuvent transmettre, dans leur zone utile, des efforts supérieurs à ceux des rondelles de type Grower mais néanmoins peu importants. Si l'on veut augmenter l'effort transmis, on doit empiler plusieurs rondelles les unes sur les autres. Mais le comportement de cet ensemble devient alors non linéaire et variable selon le sens d'évolution de la charge. Il est en particulier très dépendant des conditions de contact entre les rondelles. En outre, il y a un risque de détérioration des rondelles si, par suite d'incidents, la flèche imposée dépasse environ les deux tiers de la hauteur de la rondelle. D'autre part, en cas d'effort de serrage important, les contraintes en service dans la rondelle sont supérieures à celles autorisées par les éléments de boulonnerie, goujons ou boulons d'appareils à pression, tels qu'un générateur de vapeur ou un échangeur de chaleur.

Dans le cas de tels appareils, très sollicités, ou de tout autre matériel pour lequel on ne peut se satisfaire des conditions précédentes, il reste la possibilité d'allonger les boulons afin d'augmenter la plage de déformation élastique de la tige de ces boulons. Cela conduit à introduire une entretoise autour des boulons pour assurer la continuité de l'assemblage.

Cependant, pour que cette mesure soit efficace, elle nécessite un allongement important des boulons qui est parfois incompatible avec des conditions de montage ou d'encombrement.

On connaît également (GB-A 2 120 795) une rondelle destinée à indiquer la charge d'un assemblage boulonné. Cette rondelle est constituée d'un élément annulaire rigide, par exemple en acier, auquel est associé un élément déformable élastique, par exemple en nylon ou en élément déformable élastique, par exemple en nylon ou en néoprène. Lorsqu'elle est utilisée, cette rondelle est serrée entre une pièce à assembler et la tête du boulon. Toutefois, elle ne permet pas un allongement ou un raccourcissement substantiel de la tige du boulon sans variation importante de contrainte en cas de transitoires thermiques.

On connaît également (DE-A 2 150 467) un dispositif comportant une entretoise fendue dans un assemblage boulonné. Cette entretoise a pour fonction de restituer, par transformation de l'effort axial de serrage, une poussée en direction radiale dans un alésage d'une pièce associée pour la maintenir à une distance fixe par rapport à une autre pièce dans laquelle est vissé le goujon. Lorsqu'on serre l'écrou, le jeu préexistant dans la fente est annulé. Les deux faces de cette fente viennent en regard et glissent l'une sur l'autre de telle sorte que le diamètre extérieur de l'élément augmente. Cet élément est alors bloqué par serrage dans le trou cylindrique.

Par conséquent, la fonction de filtration des contraintes, qui est le but essentiel de l'invention, ne peut pas être obtenue étant donné que l'élément ne présente plus d'élasticité. L'entretoise fendue est un élément statique qui n'admet aucune déformation due à des dilatations de la tige du goujon sans risquer une détérioration des surfaces en contact.

L'invention a pour objet un élément pour filtrer les variations de contraintes qui se produisent dans un assemblage boulonné qui remédie à ces inconvénients.

Il doit être d'un encombrement limité et capable de supporter un effort de serrage très important.

Ces buts sont atteints conformément à l'invention par le fait que l'élément filtrant comporte les caractéristiques figurant dans la partie caractérisante de la revendication 1.

Selon une réalisation particulière, l'une au moins desdites surfaces d'appui présente une dent unique disposée au bord de la fente.

Selon une autre disposition particulière, l'une au moins desdites surfaces d'appui présente une pluralité de dents réparties sur la périphérie de la surface d'appui et de hauteur dégressive.

De préférence, l'élément selon l'invention comporte des moyens permettant la mesure de son écrasement. Ces moyens peuvent être constitués par deux pions, l'un sur l'un des côtés de la fente, l'autre sur le côté opposé, les deux pions étant espacés d'une quantité prédéterminée. Ils peuvent être constitués également par un pion situé sur l'un des côtés de la fente et une barrette fixée sur l'autre côté de la fente et disposée transversalement à celle-ci.

Selon une troisième réalisation, la fente est composée de deux parties décalées l'une par rapport à l'autre et reliées par un évidement, par exemple de forme cylindrique, pratiqué selon la circonférence du tube. Une pige calibrée peut être introduite dans cet évidement afin de vérifier la flèche de l'élément.

Selon une réalisation particulière destinée au cas où l'on dispose de peu de place entre deux boulons ou goujons voisins, l'élément comporte deux méplats formés sur le tube symétriquement par rapport à un plan passant par l'axe de l'élément et par la fente longitudinale du tube.

Par ailleurs, l'invention concerne un assemblage boulonné comportant un élément filtrant caractérisé en ce que le décalage entre les zones situées de part et d'autre de la fente est égal à h lorsque l'élément filtrant est à l'état libre et en ce que ce décalage est de l'ordre de h/2 lorsque l'assemblage boulonné est serré en l'absence de contraintes autres que la tension de serrage.

L'invention sera décrite plus en détail en référence aux figures annexées qui représentent seulement un exemple de réalisation donné à titre illustratif et nullement limitatif.

La figure 1 est une vue d'un assemblage boulonné comportant un élément de filtration des contraintes conforme à l'invention à l'état serré ;

la figure 2 est une vue en perspective d'un élément à pans coupés adapté au cas particulier où l'on dispose de peu d'espace entre l'axe de deux assemblages boulonnés consécutifs.

Les figures 3 à 5 représentent un élément de filtration conforme à l'invention, comportant des moyens de mesure de l'écrasement.

La figure 6 est une vue d'un élément conforme à l'invention présentant une fente légèrement inclinée.

La figure 7 est une vue d'un élément filtrant conforme à l'invention muni d'un détecteur d'une valeur choisie d'écrasement.

La figure 8 est une vue en perspective d'un détail de la figure 7.

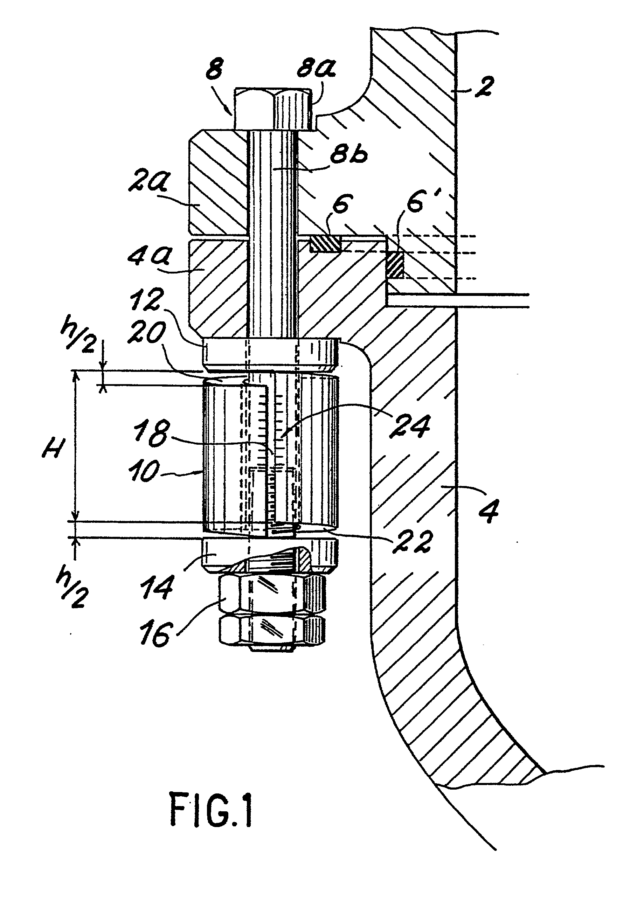

On a représenté sur la figure 1 un assemblage boulonné équipé d'un élément destiné à filtrer les variations de contraintes conforme à l'invention. L'assemblage est constitué d'une première pièce 2 et d'une seconde pièce 4. Une étanchéité est réalisée entre ces deux pièces au moyen d'un joint 6 comprimé entre les brides 2a et 4a des pièces 2 et 4, respectivement. Un autre joint 6' est prévu dans une gorge réalisée sur une partie cylindrique de la pièce 2.

Les pièces 2 et 4 sont assemblées par une série de boulons répartis à la périphérie des brides 2a et 4a. Un seul boulon 8 a été représenté sur la figure 1. Le boulon comporte une tête et une tige filetée à l'extrémité opposée à la tête. Un élément 10 conforme à l'invention, destiné à filtrer les variations de contraintes dans l'assemblage boulonné est disposé autour de la tige 8b. Il est enserré entre une rondelle 12 disposée entre une face d'appui de la bride 4a et une extrémité de l'élément 10, et une deuxième rondelle 14 disposée sur la tige 8b entre l'autre extrémité de l'élément 10 et un écrou 16.

Comme on le constate sur la figure 1, l'élément 10 est constitué par un tube cylindrique épais dont la hauteur est du même ordre de grandeur que le diamètre. Ce rapport H/d peut varier, dans les cas les plus courants, entre 0,8 et 1,5. Le diamètre intérieur du tube est choisi de manière qu'il existe un jeu faible, de quelques millimètres, entre l'élément 10 et la tige 8b. Le tube est fendu sur toute sa hauteur selon une génératrice. La fente 18 a une largeur de l'ordre du millimètre. Cette fente définit ainsi deux faces rectangulaires situées en vis-à-vis. La longueur de chacune de ces faces est égale à H, et sa largeur à l'épaisseur du tube. De chaque côté de la pièce, il existe un décalage entre les arêtes constituées par l'intersection des deux faces rectangulaires parallèles et des surfaces extrêmes 20, 22 de l'élément 10. Lorsque l'élément est à l'état libre (ce qui n'est pas le cas sur la figure 1), ce décalage est égal à h. Ce décalage ou flèche h est faible, de l'ordre du millimètre, et en tout cas très petit vis-à-vis de la hauteur H de l'élément 10. A titre d'exemple, le rapport h/H est de l'ordre de 0,01. Les arêtes restent sensiblement perpendiculaires à l'axe du cylindre.

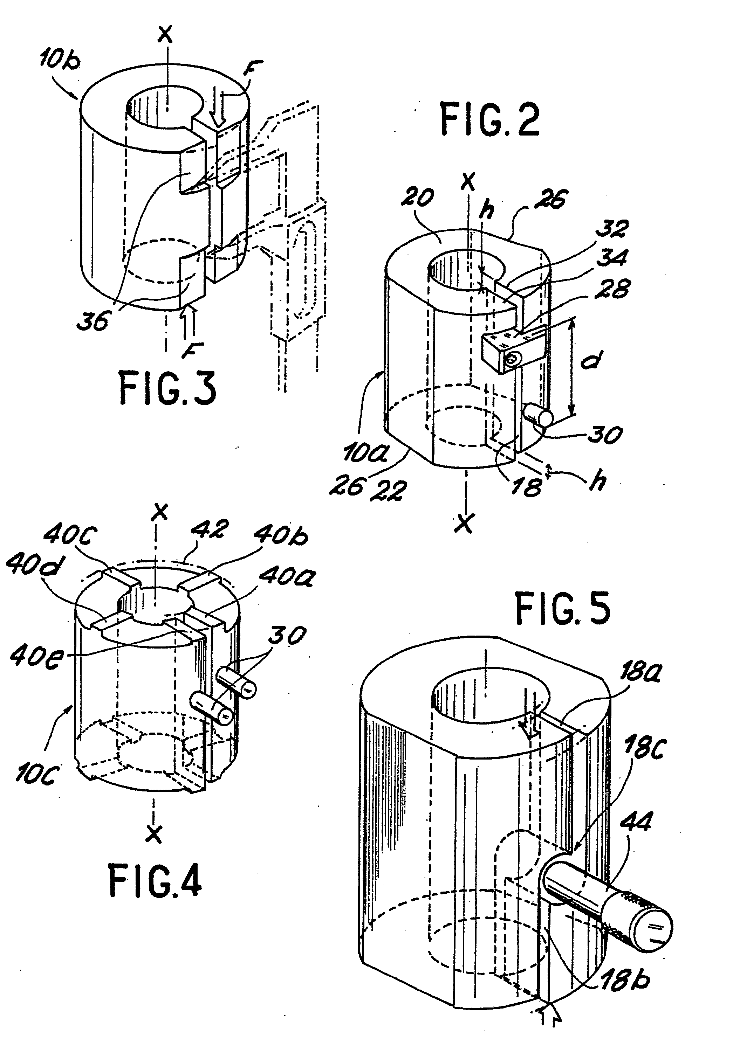

On constate que sur l'élément 10 de la figure 1 les surfaces extrêmes 20 et 22 définissent les surfaces d'appui et se présentent sous la forme d'une rampe hélicoïdale. Il en est de même dans le cas des variantes de réalisation des figures 2, 3 et 5.

L'élément 10 est dimensionné en hauteur, épaisseur et flèche de manière à ce que sa déformation élastique résultant de l'effort de serrage initial de l'écrou 16 ne consomme qu'une partie de la flèche h disponible. En d'autres termes, le décalage entre les zones de chaque surface d'appui 20 et 22 situées de part et d'autre de la fente 18 est égal à h lorsque l'élément filtrant 10 est à l'état libre et ce décalage est de l'ordre de h/2 lorsque l'assemblage boulonné est serré, en l'absence de contraintes autres que la tension de serrage. Selon que l'on anticipe, pour le fonctionnement de l'assemblage, plutôt de phénomènes de sur-serrage ou plutôt des phénomènes de sous-serrage, on aurait intérêt à ce que la flèche initiale soit plutôt inférieure à h/2 ou plutôt supérieure à h/2. Pendant ces phases de fonctionnement, l'élément 10 diminue substantiellement les variations d'effort vues par l'assemblage boulonné 8 en raison de la souplesse qu'il introduit.

L'invention comporte des moyens de mesure de la flèche h. Dans l'exemple de réalisation représenté sur la figure 1, ces moyens sont constitués par un vernier au dixième. Ce vernier comporte neuf graduations d'un côté de la fente 18 et dix graduations de l'autre. Il permet ainsi de mesurer la flèche avec une précision de 1 dixième de millimètre.

L'élément filtrant 10 est fabriqué de préférence par usinage. Le diamètre intérieur de l'élément est obtenu d'origine si l'on part d'un tube épais ou réalisé par perçage, si l'on part d'un cylindre plein. Le tube est fendu sur toute sa hauteur selon une génératrice par fraisage. Chacune des faces du tube ainsi obtenu est usinée de façon telle qu'il existe, après usinage, un décalage entre les arêtes de part et d'autre de la fente. Les surfaces usinées sont telles que l'on passe de façon monotone de l'arête supérieure à l'arête inférieure. Dans les modes de réalisation des figures 1, 2, 3 et 5, chacune des surfaces d'appui est usinée selon une rampe hélicoïdale.

On a représenté sur la figure 2 une variante de réalisation dans laquelle le tube de l'élément 10a comporte deux pans coupés 26 réalisés symétriquement par rapport à un plan passant par l'axe XX du tube et par la fente 18. Les pans coupés 26 ont pour but d'adapter l'élément à diverses conditions d'encombrement lorsque sur une bride, la distance entre goujons est faible. L'exemple représenté sur la figure 2 est adapté au cas d'une bride circulaire. En conséquence, les pans coupés 26 sont orientés radialement par rapport à l'axe de la bride à laquelle l'assemblage est destiné. Il va de soi que selon une variante, les pans coupés 26 peuvent être parallèles si les éléments sont montés sur une partie rectiligne.

L'élément 10a (fig. 2) comporte également des moyens permettant la mesure de la flèche. Ces moyens sont constitués par une barrette 28 disposée transversalement à la fente 18 et fixée sur l'un des côtés de cette fente. Les moyens comprennent d'autre part un pion 30 fixé sur l'autre côté de la fente à une distance prédéterminée d du côté supérieur de la barrette. Lorsque l'élément 10a est à l'état libre, c'est-à-dire en l'absence de toute contrainte, le décalage entre deux arêtes d'une surface d'appui 20 ou 22, par exemple les arêtes 32 et 34 de la surface d'appui 20, est une hauteur h et la distance entre la face supérieure de la barrette 28 et le pion 30 est égale à d. Lorsque l'élément 10a est serré dans un assemblage boulonné, le décalage entre les arêtes 32 et 34, ainsi que le décalage entre les arêtes (non référencées) de la face opposée 22, est réduit, par exemple à la moitié de sa valeur, soit h/2. Pour connaître la valeur du décalage à l'état serré, il suffit de mesurer, par exemple au moyen d'un pied à coulisse, la distance d' nouvelle entre la face supérieure de la barrette transversale 28 et le pion 30. La différence d - d' donne la variation de la flèche de l'élément 10a.

On a représenté sur la figure 3 une troisième variante de réalisation d'un élément 10b conforme à l'invention. Dans cette réalisation, le tube est de forme cylindrique et les surfaces d'appui 20 et 22 sont de forme hélicoïdale. L'élément 10b comporte des méplats ou saignées 36. A l'état libre de l'élément, les bords des saignées 36 sont situés au même niveau. Lorsque l'élément est comprimé, ces bords sont décalés en sens inverse des zones d'appui d'une distance qui peut être mesurée au pied à coulisse. On peut ainsi contrôler la flèche de l'élément en position serrée.

On a représenté sur la figure 4 une autre variante de réalisation 10c d'un élément conforme à l'invention. Dans cette variante, les surfaces d'appui supérieure 20 et inférieure 22 de l'élément sont constituées par une série de dents 40a, 40b, 40c, 40d, 40e de hauteur décroissante. Les dents sont réparties angulairement de manière régulière, radialement sur les extrémités du tube. Le décalage entre deux dents successives est tel que l'on peut faire passer une surface hélicoïdale représentée en traits interrompus 42 par le sommet de ces dents. A l'état libre de l'élément 10c, le décalage entre la dent 40a et la dent 40e est égal à h.

D'autre part, l'élément 10c (figure 4) comporte des moyens qui permettent de mesurer la flèche à l'état serré. Ces moyens sont constitués par deux pions 30 situés de part et d'autre de la fente 18 et espacés, à l'état libre de l'élément 10c, d'une distance prédéterminée. On peut mesurer l'écartement par tout moyen convenable, tel qu'un pied à coulisse.

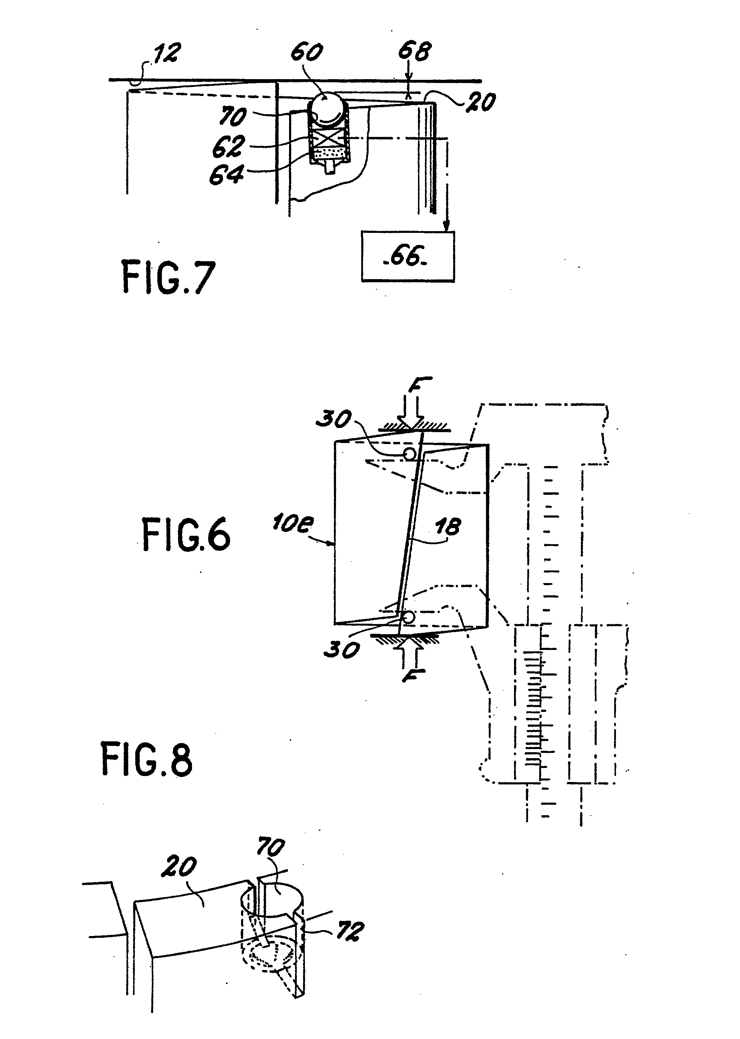

On a représenté sur la figure 5 une cinquième variante 10d d'un élément conforme à l'invention. Dans cette variante, la fente 18 est constituée de deux parties 18a et 18b décalées angulairement l'une par rapport à l'autre, par rapport à l'axe XX de l'élément. Les parties 18a et 18b sont reliées l'une à l'autre par un évidement 10c réalisé de forme générale cylindrique sur la figure 5. Une pige calibrée 44 peut être introduite dans l'évidement 10c pour contrôler la flèche de l'élément.

On a représenté sur la figure 6 une variante de réalisation d'un élément selon l'invention dans lequel la fente 18 est légèrement inclinée, par exemple de 5°, de sorte que les pions 30 se trouvent sur une même génératrice, ce qui permet une mesure facile de la flèche, par exemple au moyen d'un pied à coulisse lorsqu'un effort de serrage F est exercé.

On a représenté sur la figure 7 une autre forme de réalisation de l'invention dans laquelle l'élément 10 comporte des moyens de détection d'une valeur choisie de la flèche. Dans l'exemple représenté, ces moyens sont constitués par une bille 60, par un détecteur piézoélectrique 62 et par un compensateur 64 disposé sous le détecteur 62. Ce compensateur est constitué par exemple par une pastille de caoutchouc mousse. Le détecteur 62 est relié à un avertisseur 66. Le diamètre de la bille 60 est déterminé de telle manière qu'elle entre en contact avec la rondelle 12 lorsqu'une valeur choisie de la flèche est obtenue. La pression de contact de la bille 60 sur le détecteur 62 actionne l'aVertisseur 66. La bille, le détecteur et l'amortisseur sont logés dans une capsule sertie qui est introduite dans un trou 70 de profondeur déterminée (voir fig. 8). Une fente 72 permet le passage des fils du détecteur 62.

L'invention, telle qu'elle vient d'être décrite, apporte de nombreux avantages.

En raison de la configuration massive de l'élément, ce dernier travaille dans un domaine élastique sous des charges importantes. Cela permet pour cet élément de respecter les critères de contraintes des éléments de boulonnerie des appareils sous pression tels que générateurs de vapeur et échangeurs de chaleur.

Etant donné que l'élément est usiné, on peut atteindre une grande précision et une grande reproductibilité des cotes fonctionnelles, en particulier la flèche h à l'état libre.

L'élément est facilement modélisable, par exemple pour des calculs par la méthode des éléments finis. On peut donc connaître avec précision ses caractéristiques de rigidité. Des essais, confirmant les calculs, ont montré que la variation de la déformation en fonction de l'effort est quasiment linéaire sur plus de 80 % de la flèche disponible h.

L'élément peut être facilement adapté en fonction des caractéristiques souhaitées en jouant sur la hauteur, l'épaisseur du tube, la flèche à l'origine et le matériau dans lequel il est réalisé.

L'encombrement en hauteur est faible. De plus, l'élément peut être adapté à des conditions très diverses d'encombrement comme on l'a expliqué en référence à la figure 2.

En cas de surcharge accidentelle, l'élément n'est pas détruit. En effet, lorsque la flèche est complètement annulée, l'élément ne subit pas de déformation plastique permanente. Il se comporte comme une bague rigide classique et les charges maximales admissibles sont alors considérables.

EXEMPLE

On a réalisé un élément destiné à un échangeur équipé de goujons de 39 mm de diamètre et qui subit, du côté de la boîte à eau, des transitoires thermiques très violents de 20 à 300°C, avec retour de 300°C à 20°C. L'élément présente les dimensions suivantes :

- Hauteur H : 110 mm ;
- Diamètre extérieur : 106 mm ;
- Diamètre intérieur : 41 mm ;
- Largeur de la fente : 3 mm ;
- Flèche : 1,2 mm.

Cet élément s'écrase de 1 mm sous une charge de 34 tonnes. L'effort de serrage spécifié par goujon pour l'appareil est de 17 tonnes. Lors des transitoires thermiques, les variations maximales enregistrées sont de l'ordre de + 8 tonnes au surserrage et de - 4 tonnes au sous-serrage. Dans les mêmes conditions, sur un appareil non équipé du dispositif de l'invention, les amplitudes de variations seraient deux à trois fois supérieures.

En outre, pour retrouver des performances correspondantes à celles de l'élément réalisé, il faudrait allonger les goujons de plus de 500 mm. On constate donc que l'encombrement du dispositif serait considérablement augmenté puisque la hauteur d'un élément selon l'invention est de 110 mm seulement, soit près de cinq fois moins.

**Revendications**

1. Elément filtrant destiné à filtrer les variations de contraintes dans un assemblage boulonné, l'assemblage comportant une première et une seconde pièces (2, 4) percées chacune d'au moins un trou en regard, un élément fileté (8) traversant lesdits trous et un écrou (16) vissé sur la vis, caractérisé en ce que ledit élément filtrant est constitué par un tube de forme générale allongée dont la hauteur (H) est supérieure ou égale à 0,8 fois son diamètre, entourant la vis (8) et présentant d'une part une surface d'appui (20, 22), sur une face (12) de l'une des première et seconde pièces (2, 4), et présentant d'autre part une surface d'appui (20, 22) sur une face (14) de l'écrou (16), ces deux surfaces d'appui (20, 22) étant interrompues par une fente (18) qui traverse le tube de part en part selon une section de direction générale longitudinale de ce tube avec un jeu entre les bords de la fente, ce jeu subsistant après le serrage de l'élément, un décalage (h) étant prévu sur chacune des surfaces d'appui (20, 22) et entre les zones des surfaces d'appui (20, 22) situées respectivement de part et d'autre de ladite fente, ces deux décalages étant de sens opposés selon la direction longitudinale de l'élément.

2. Elément selon la revendication 1, caractérisé en ce que l'une au moins desdites surfaces d'appui (20, 22) présente une dent unique (40a) disposée au bord de la fente (18).

3. Elément selon la revendication 1, caractérisé en ce que l'une au moins desdites surfaces d'appui (20, 22) présente une pluralité de dents (40a, 40e) réparties sur la périphérie de la surface d'appui (20, 22) et de hauteur décroissante.

4. Elément selon la revendication 1, caractérisé en ce que l'une au moins desdites surfaces d'appui (20, 22) est constituée par une rampe hélicoïdale.

5. Elément selon l'une quelconque des revendications 1 à 4, caractérisé en ce qu'il comporte des moyens permettant de mesurer la flèche h.

6. Elément selon la revendication 5, caractérisé en ce que lesdits moyens sont constitués par deux pions 30, situés l'un sur l'un des côtés de la fente 18 et l'autre sur le côté opposé de cette fente, les deux pions étant espacés d'une distance prédéterminée d.

7. Elément selon la revendication 5, caractérisé en ce que les moyens permettant la mesure de la flèche h sont constitués par un pion 30 situé sur l'un des côtés de la fente 18 et par une barrette transversale 28 fixée sur l'autre côté de cette fente 18 et disposée perpendiculairement à elle, une face de la barrette transversale 28 étant située à une distance d prédéterminée du pion 30.

8. Elément selon la revendication 5, caractérisé en ce que la fente 18 est composée de deux parties 18a, 18b décalées l'une par rapport à l'autre et reliée par un élément 18c pratiqué selon la circonférence du tube.

9. Elément selon la revendication 8, caractérisé en ce que l'évidement 18c est de forme générale cylindrique.

10. Elément selon l'une quelconque des revendications 1 à 9, caractérisé en ce que le tube comporte deux méplats 26 formés symétriquement par rapport à un plan passant par l'axe XX des tubes et par la fente longitudinale 18.

11. Elément selon l'une quelconque des revendications 1 à 10 caractérisé en ce que la fente (18) est inclinée.

12. Assemblage boulonné comportant un élément filtrant selon la revendication 1, caractérisé en ce que le décalage entre les zones des surfaces d'appui (20, 22) situées de part et d'autre de la fente 18 est égal à h lorsque l'élément filtrant est à l'état libre et en ce que ce décalage est de l'ordre de h/2 lorsque l'assemblage boulonné est serré en l'absence de contraintes autres que la tension de serrage.

13. Elément selon la revendication 4, caractérisé en ce que les moyens permettant de mesurer la flèche h sont constitués par un détecteur 62, surmonté d'un élément de contact calibré tel qu'une bille 60, un élément amortisseur 64 étant disposé sous le détecteur 62, ce dernier étant relié à un avertisseur 66.

## Patentansprüche

1. Ausgleichselement, das dazu bestimmt ist, Spannungsänderungen in einer Schraubverbindung auszugleichen, welche Verbindung erste und zweite Teile (2, 4) aufweist, die jeweils von einem Loch durchdrungen sind, die einander gegenüberstehen, wobei ein Gewindeelement (8) die genannten Löcher durchquert und eine Mutter (16) auf die Schraube geschraubt ist, dadurch gekennzeichnet, daß das genannte Ausgleichselement von einem im wesentlichen länglichen Rohr gebildet ist, dessen Höhe (H) größer oder gleich dem 0,8fachen seines Durchmessers ist, das die Schraube (8) umgibt und einerseits eine Anlagefläche (20, 22) gegenüber einer Seite (12) einer der ersten und zweiten Teile (2, 4) und andererseits eine Anlagefläche (20, 22) gegenüber einer Seite (14) der Mutter (16) aufweist, wobei diese beiden Anlageflächen (20, 22) durch einen Spalt (18) unterbrochen sind, der das Rohr vom einen zum anderen Ende in einem im wesentlichen längsgerichteten Schnitt des Rohres durchquert, wobei ein Zwischenraum zwischen den Rändern des Spaltes ausgebildet ist, der nach dem Festziehen des Elements verbleibt, wobei ein Versatz (h) auf jeder der Anlageflächen (20, 22) zwischen den Zonen der Anlageflächen (20, 22), die zu beiden Seiten des Spaltes liegen, vorgesehen ist, wobei diese zwei Versätze in Längsrichtung des Elementes einander entgegengesetzten Sinn haben.

2. Element nach Anspruch 1, dadurch gekennzeichnet, daß wenigstens eine der genannten Anlageflächen (20, 22) einen einzelnen Zahn (40a) aufweist, der am Rand des Spaltes (18) angeordnet ist.

3. Element nach Anspruch 1, dadurch gekennzeichnet, daß wenigstens eine der genannten Anlageflächen (20, 22) mehrere Zähne (40a, 40e) aufweist, die auf dem Umfang der genannten Anlagefläche (20, 22) verteilt sind und abnehmende Höhe haben.

4. Element nach Anspruch 1, dadurch gekennzeichnet, daß wenigstens eine der ganannten Anlageflächen (20, 22) von einer Wendelfläche gebildet ist.

5. Element nach einem der Ansprüche 1 bis 4, dadurch gekennzeichnet, daß es Einrichtungen enthält, die die Messung der Höhe (h) gestatten.

6. Element nach Anspruch 5, dadurch gekennzeichnet, daß die Einrichtungen von zwei Stiften (30) gebildet sind, von denen einer auf einer der Seiten des Spaltes (18) und der andere auf der gegenüberliegenden Seite dieses Spaltes angeordnet ist, wobei die beiden Stifte um eine vorbestimmte Distanz (d) voneinander entfernt sind.

7. Element nach Anspruch 5, dadurch gekennzeichnet, daß die die Messung der Höhe (h) ermöglichenden Einrichtungen von einem Stift (30), der auf einer der Seiten des Spaltes (18) angeordnet ist, und einem Querriegel (28), der auf der anderen Seite des Spaltes (18) befestigt und senkrecht zu diesem angeordnet ist, gebildet sind, wobei eine Seite des Querriegels (28) in einer vorbestimmten Distanz (d) vom Stift (30) entfernt gelegen ist.

8. Element nach Anspruch 5, dadurch gekennzeichnet, daß der Spalt (18) von zwei Teilen (18a, 18b) gebildet ist, die gegeneinander versetzt durch eine im Umfang des Rohres ausgebildete Ausnehmung (18c) miteinander verbunden sind.

9. Element nach Anspruch 8, dadurch gekennzeichnet, daß die Ausnehmung (18c) eine im wesentlichen zylindrische Gestalt hat.

10. Element nach einem der Ansprüche 1 bis 9, dadurch gekennzeichnet, daß das Rohr zwei Abflachungen (26) aufweist, die symmetrisch in bezug auf eine Ebene ausgebildet sind, die durch die Achse (XX) der Rohre und durch den Längsspalt (18) verläuft.

11. Element nach einem der Ansprüche 1 bis 10, dadurch gekennzeichnet, daß der Spalt (18) geneigt ist.

12. Schraubanordnung, enthaltend ein Ausgleichselement nach Anspruch 1, dadurch gekennzeichnet, daß der Versatz zwischen den Zonen der Anlageflächen (20, 22), die zu beiden Seiten des Spaltes (18) liegen, gleich h ist, wenn das Ausgleichselement im entspannten Zustand ist, und daß der Versatz in der Größenordnung von h/2 ist, wenn die Schraubanordnung bei Abwesenheit anderer Spannungen als der Festschraubspannung festgeschraubt wird.

13. Element nach Anspruch 4, dadurch gekennzeichnet, daß die Einrichtungen, die die Höhe (h) zu messen gestatten, von einem Detektor (62) gebildet sind, über dem sich ein kalibriertes Kontaktelement, beispielsweise eine Kugel (60) befindet, wobei sich ein Dämpfungselement (64) unter dem Detektor (62) befindet, welch letzterer mit einer Anzeigeeinrichtung (66) verbunden ist.

**Claims**

1. Filtering element for filtering stress variations in a bolted assembly, the assembly having first and second members (2, 4), each having at least one facing hole, a threaded member (8) passing through said holes and a nut (16) screwed onto the screw, characterized in that the filtering element is constituted by a generally elongated tube, whose height H is equal to or greater than 0.8 times its diameter, which surrounds the screw (8) and has on the one hand a bearing surface (20, 22) on one face (12) of one of the first and second members (2, 4) and on the other hand having a bearing surface (20, 22) on one face (14) of the nut (16), said two bearing surfaces (20, 22) being interrupted by a slot (18) which completely traverses the tube in accordance with a generally longitudinal directional section thereof, a displacement h being provided on each of the bearing surfaces (20, 22) and between the zones of the bearing surfaces (20, 22) located respectively on either side of said slot, these two displacements being in opposite directions in accordance with the longitudinal direction of the element.

2. Element according to claim 1, characterized in that at least one of the bearing surfaces (20, 22) has a single tooth (40a) arranged on the edge of the slot (18).

3. Element according to claim 1, characterized in that at least one of the bearing surfaces (20, 22) has a plurality of teeth (40a, 40e) distributed over the periphery of the bearing surface (20, 22) and having decreasing heights.

4. Element according to claim 1, characterized in that at least one of the bearing surfaces (20, 22) is constituted by a helical ramp.

5. Element according to any one of the claims 1 to 4, characterized in that it has means making it possible to measure the sag h.

6. Element according to claim 5, characterized in that said means are constituted by two pins (30), one of which is located on one of the sides of the slot (18) and the other on the opposite side thereof, the two pins being spaced by a predetermined distance d.

7. Element according to claim 5, characterized in that the means making it possible to measure the sag h are constituted by a pin (30) located on one of the sides of the slot (18) and by a transverse strip (28) fixed to the other side of slot (18) and positioned perpendicularly thereto, one face of the transverse strip (28) being located at a predetermined distance d from the pin (30).

8. Element according to claim 5, characterized in that the slot (18) is formed from two portions (18a, 18b), which are displaced with respect to one another and connected by an element (18c) made along the tube circumference.

9. Element according to claim 8, characterized in that the cutout (18c) has a generally cylindrical shape.

10. Element according to any one of the claims 1 to 9, characterized in that the tube has two flats (26) formed symmetrically with respect to a plane passing through the axis XX of the tube and through the longitudinal slot (18).

11. Element according to any one of the claims 1 to 10, characterized in that the slot (18) is inclined.

12. Bolted assembly having a filtering element according to claim 1, characterized in that the displacement between the zones of the bearing surfaces (20, 22) located on either side of the slot (18) is equal to h when the filtering element is in the free state and wherein this displacement is approximately h/2 when the bolted assembly is tightened in the absence of stresses other than the tightening tension.

13. Element according to claim 4, characterized in that the means making it possible to measure the sag h are constituted by a detector (62), surmounted by a calibrated contact element such as a ball (60), a damping member (64) being positioned beneath the detector (62), the latter being connected to an indicator (66).

FIG.1

FIG.2

FIG.3

FIG.4

FIG.5

EP 0 194 907 B1

FIG.7

FIG.6

FIG.8